# EUROPEAN PATENT APPLICATION

(11) **EP 4 704 045 A1**
(43) Date of publication of application: **04.03.2026**
(21) Application number: 25195358.4
(22) Date of filing: 12.08.2025
(51) Int. Cl.: G06V 10/82

(54) **METHOD AND SYSTEM FOR GENERATING ROBOTIC INSTRUCTIONS**

(30) Priority: 30.08.2024 US 202418821834
(71) Applicant: Accenture Global Solutions Limited, Dublin 4 (IE)
(72) Inventor: ABHINAV, Kumar, Bangalore (IN); DUBEY, Alpana, Bangalore (IN); SENGUPTA, Shubhashis, Bangalore (IN)
(74) Representative: Müller-Boré & Partner Patentanwälte PartG mbB

(57) **Abstract**

A computer-implemented method to generate robotic instructions is disclosed. The method may include receiving video data demonstrating one or more tasks and text data related to the one or more tasks. Further, the method may include encoding the video data and the text data, wherein the encoding is generated using at least one cross-attentional transformer. The method also includes receiving image data providing environmental data for at least one robotic task. Furthermore, the method may include encoding vision data corresponding to the image data. Consequently, the method may include generating robotic instructions based upon the video data, the text data and the vision data that was encoded.

## Description

### TECHNICAL FIELD

Various embodiments described herein relate generally to generating robotic instructions. Specifically, a method and a system are disclosed for generating robotic instructions from contextual data using generative artificial intelligence (Gen AI) and machine learning (ML) techniques.

### BACKGROUND

Recent advancements in generative artificial intelligence (Gen AI) have facilitated their integration into robotics applications. A notable application lies in the generation of action planning for robotic tasks based on complex natural language instructions. While Gen AI models can effectively process and understand natural language, their responses may not always align with the desired actions due to ambiguities or contextual limitations.

### SUMMARY

Implementations of the present disclosure are generally directed to generating robotic instructions. More particularly, implementations of the present disclosure are directed to methods and systems for generating robotic instructions from contextual data using generative artificial intelligence (Gen AI) and machine learning (ML) techniques.

**In** general, innovative aspects of the subject matter described in this specification provide methods and systems for generating robotic instructions. The method may include receiving video data demonstrating one or more tasks and text data related to the one or more tasks. Further, the method may include encoding the video data and the text data, wherein the encoding is generated using at least one cross-attentional transformer. The method also includes receiving image data providing environmental data for at least one robotic task. Furthermore, the method may include encoding vision data corresponding to the image data. Consequently, the method may include generating robotic instructions based upon the video data, the text data and the vision data that was encoded.

The present disclosure further describes a system for implementing the method provided herein. The present disclosure also describes non-transitory computer-readable media (CRM) storing instructions coupled to one or more processors and having instructions stored thereon which, when executed by the one or more processors, cause the one or more processors to perform operations in accordance with the method described herein.

It is appreciated that method in accordance with the present disclosure can include any combination of the aspects and features described herein. That is, the method in accordance with the present disclosure is not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DRAWINGS

Various embodiments in accordance with the present disclosure will be described with reference to the drawings, in which:
FIG. 1 illustrates an example environment that may be used to execute implementations of the present disclosure.
FIG. 2 illustrates a block diagram for training generative artificial intelligence (Gen AI) model to enable a robot to execute tasks based on virtual demonstrations, in accordance with implementations of the present disclosure.
FIG. 3 illustrates an example system architecture for generating robotic instructions in accordance with implementations of the present disclosure.
FIG. 4 illustrates a block diagram that presents video encoding by a video encoder to capture frame-level features from an input video of virtual demonstration of a task, in accordance with implementations of the present disclosure.
FIG. 5 illustrates a block diagram that presents video encoding by the video encoder to capture dynamic motion of an object from the input video of virtual demonstration of the task in accordance with implementations of the present disclosure.
FIG. 6 illustrates a hierarchical vision transformer (HVT) architecture of the video encoder for image segmentation and action recognition tasks, in accordance with implementations of the present disclosure.
FIG. 7 illustrates an exemplary illustration of processing the analyzed video of virtual demonstration of a task, in accordance with implementations of the present disclosure.
FIG. 8 illustrates an example block diagram of a multimodal encoder, in accordance with implementations of the present disclosure.
FIG. 9 illustrates an example block diagram of a decoder, in accordance with implementations of the present disclosure.
FIG. 10 illustrates an example block diagram of an architecture of the decoder, in accordance with implementations of the present disclosure.
FIG. 11 illustrates an example flow diagram of method operations for generating robotic instructions, in accordance with implementations of the present disclosure.
FIG. 12 illustrates an example flow diagram of method operations for encoding video data by a video encoder, in accordance with implementations of the present disclosure.
FIG. 13 illustrates an example computer system that may be used to generate robotic instructions, in accordance with implementations of the present disclosure.

Like reference numbers and designations in the various drawings indicate like elements.

### DETAILED DESCRIPTION

In the following description, various embodiments will be illustrated by way of example and not by way of limitation in the figures of the accompanying drawings. References to various embodiments in this disclosure are not necessarily to the same embodiment, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" (e.g., "for example", "an example of", "by way of example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of embodiments. However, it will be understood by one of ordinary skill in the art that embodiments may be practiced without these specific details. For example, systems may be shown in block diagrams so as not to obscure the embodiments in unnecessary detail. In other instances, well-known processes, structures, and techniques may be shown without unnecessary detail in order to avoid obscuring example embodiments.

The specification and drawings are to be regarded in an illustrative rather than a restrictive sense. It will, however, be evident that various modifications and changes may be made thereunto without departing from the broader spirit and scope of the invention as set forth in the claims.

The adoption of robots in diverse industries has been hindered by the complexity and time-consuming nature of programming their movements and interactions. Known methods require developers to write intricate instructions manually for each specific task, making it difficult to adapt to changing environments or task variations. This inefficiency results in significant redundancy in development of a robotic action plan and further complex resources are associated with engineering labor. Existing robotics methods involve engineers translating task requirements into robotic action plan. Thus, existing robotics methods are time consuming, may generate actions that are inconsistent with the collaborator's intentions and requires deep technical expertise. The limitations of these methods have restricted the deployment of robots to primarily repetitive tasks with minimal variation, hindering their broader application across a wider range of industries and applications.

In view of this, implementations of the present disclosure propose methods and systems generating robotic instructions, to overcome above mentioned drawbacks of known methods of generating robotic instructions. The present disclosure utilizes generative artificial intelligence (Gen AI) techniques or generative neural network (GNN) that aims to facilitate execution of a robot task through demonstration. Specifically, Gen AI models can receive video demonstrations as input and translate them into precise robotic instructions. By training the Gen AI models on a dataset of video demonstrations and corresponding robotic instructions, the non-technical users can also effectively program robots by simply providing video examples of desired tasks. The present methos and systems can then generate the necessary robotic action plan to execute these tasks, making task execution by robot more accessible and efficient. In essence, the robot can autonomously learn the desired tasks from the input data, such as video demonstrations or textual descriptions. Moreover, based on the learned information, the robot can accurately predict and execute the necessary actions to accomplish the task.

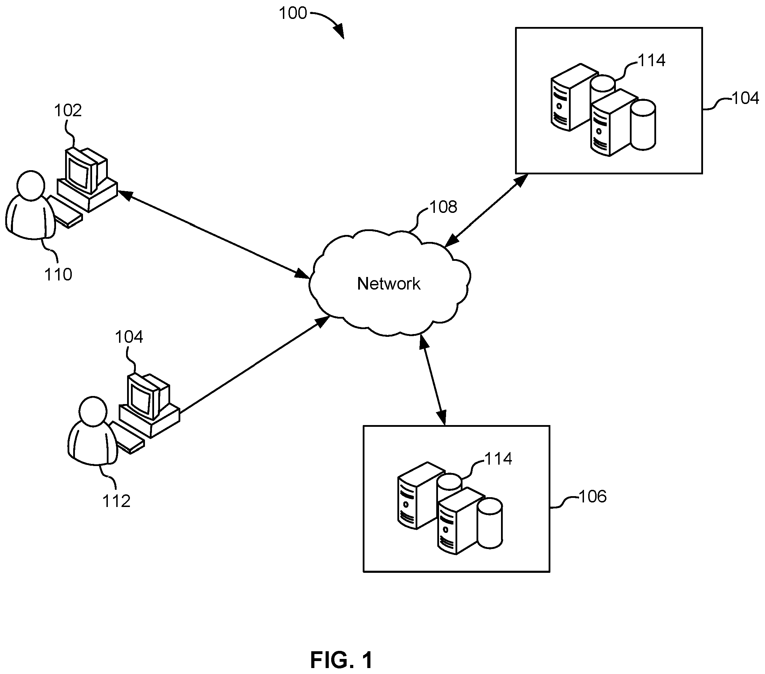

FIG. 1 depicts an example environment 100 that can be used to execute implementations of the present disclosure. In some examples, the example environment 100 enables users associated with respective systems to execute requests to generate content by invoking a trained language model in accordance with implementations of the present disclosure. The example environment 100 includes computing devices 102 and 104, back-end systems 106, and a network 108. In some examples, the computing devices 102 and 104 are used by respective users 110 and 112 to log into and interact with the platforms and execute applications according to implementations of the present disclosure.

In the depicted example, the computing devices 102 and 104 are depicted as desktop computing devices. It is contemplated, however, that implementations of the present disclosure can be realized with any appropriate type of computing device (e.g., smartphone, tablet, laptop, personal computer, voice-enabled devices, etc.). In some examples, the network 108 includes a local area network (LAN), wide area network (WAN), the Internet, or a combination thereof, and connects web sites, user devices (e.g., computing devices 102, 104), and back-end systems (e.g., the back-end systems 106). In some examples, the network 108 can be accessed over a wired and/or a wireless communications link. For example, mobile computing devices, such as smartphones can utilize a cellular network to access the network 108.

In the depicted example, the back-end systems 106 each include at least one server system 114. In some examples, the at least one server system 114 hosts one or more computer implemented services that users can interact with using computing devices (e.g., computing devices 102 and/or 104). For example, components of enterprise systems and applications can be hosted on one or more of the back-end systems 106. In some examples, a back-end system can be provided as an on-premises system that is operated by an enterprise or a third-party taking part in cross-platform interactions and data management. In some examples, a back-end system can be provided as an off-premises system (e.g., cloud or on-demand) that is operated by an enterprise or a third-party on behalf of an enterprise.

In some examples, the computing devices 102 and 104 each include computer-executable applications executed thereon. In some examples, the computing devices 102 and 104 each include a web browser application executed thereon, which can be used to display one or more web pages of applications executing on the back-end system 106. In some examples, each of the computing devices 102 and 104 can display one or more graphical user interfaces (GUIs) enabling the respective users 110 and 112 to interact with the back-end system 106. In accordance with implementations of the present disclosure, the back-end systems 106 may host enterprise applications or systems that require data sharing and data privacy. In some examples, the computing device 102 and/or the computing device 104 can communicate with the back-end systems 106 over the network 108.

In some implementations, at least one of the back-end systems 106 can be implemented in a cloud environment that includes at least one server system 114. In the example of FIG. 1, the back-end server 106 can represent various forms of servers including, but not limited to, a web server, an application server, a proxy server, a network server, and/or a server pool. In general, server systems accept requests for application services and provide such services to any number of client devices (for example, the computing device 102 over the network 108).

In some implementations, the back-end system 106 can be used to implement an Artificial Intelligence (AI)-enabled platform trained to generate content relevant for individuals in accordance with contextual information and training data indicative of reactions of similar consenting individuals to certain content items (e.g., neuroscience responses). The AI-enabled platform can include a trained AI model that generates such personalized content.

Various examples depicting generation of robotic instructions are described in detail in conjunctions with figures below.

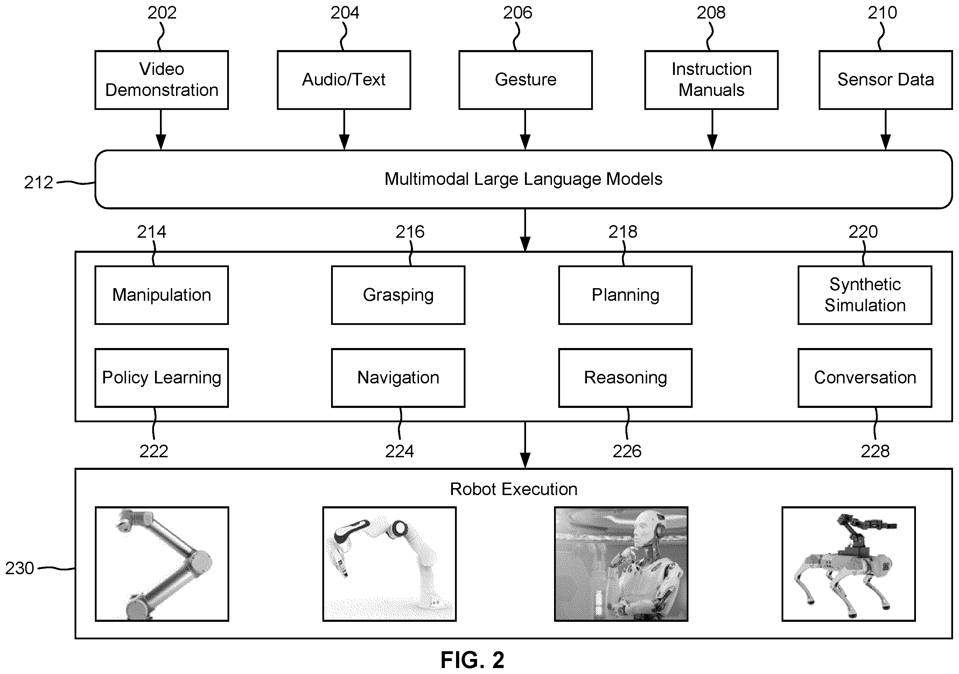

FIG. 2 illustrates a block diagram for training and deploying Gen AI model to enable robots to execute tasks based on virtual demonstrations, in accordance with implementations of the present disclosure. In an example, the Gen AI model may be a multimodal large language model (MLLM). Specifically, the MLLM 212 can be artificial intelligence (AI) models capable of integrating and analyzing data/information from multiple input modalities, such as text, images, audio, and video.

The MLLM 212 may combine data from different inputs and translates them into precise robotic instructions. The MLLM 212 may receive inputs including, but not limited to, video 202, audio/text 204, gestures 206, instruction manuals 208 and sensor data 210, defining the desired corresponding robotic actions. Herein the video 202 may include visual demonstrations of tasks, for example, a human assembling furniture. The audio/text 204 may include verbal instructions or descriptions of the task accompanying the video 202 or independent from the video 202. The gesture 206 may include movements (for example hand movements or object movements) associated with the task. The instruction manual 208 may include textual guidelines or procedures for completing the task. The sensor data 210 may be associated with information about the environment.

The input modalities may be processed by MLLM 212 to extract relevant information. The MLLM 212 may generate a sequence of robotic instructions based on the learned patterns and correlations between the input modalities and desired robotic actions. Specifically, the MLLM 212 may generate robotic instructions for one or more tasks. The one or more tasks may include, but not limited to, manipulation 214, grasping 216, planning 218, synthetic simulation 220, policy learning 222, navigation 224, reasoning 226, and conversation 228. The manipulation 214 may include actions involving moving or manipulating objects. The grasping 216 may include specific actions related to grasping objects. The planning 218 may include creating a sequence of actions to achieve the desired robotic actions. The synthetic simulation 220 may include simulating the environment and robot interactions to test and refine robotic actions. The policy learning 222 may include learning policies that map states (observations of the environment) to desired robotic actions. The navigation 224 may include analyzing the tasks involving movement in a physical environment. The reasoning 226 may include identifying the underlying logic and relationships between different elements of input data/information. The conversation 228 may include interacting with users in a natural language.

Thereafter, the generated robotic instructions may be sent to a robot 230, which executes the one or more tasks according to the received robotic instructions. In essence, the MLLM 212 may translate virtual demonstrations into precise robotic instructions enabling robot 230 to learn and perform tasks through robotic instructions generated based upon observation and guidance. Even though, the robotic instructions are generated using virtual demonstrations, the robotic instructions may be generated based on a live performance generating audio visual data illustrating various gestures, instructions, and/or environment.

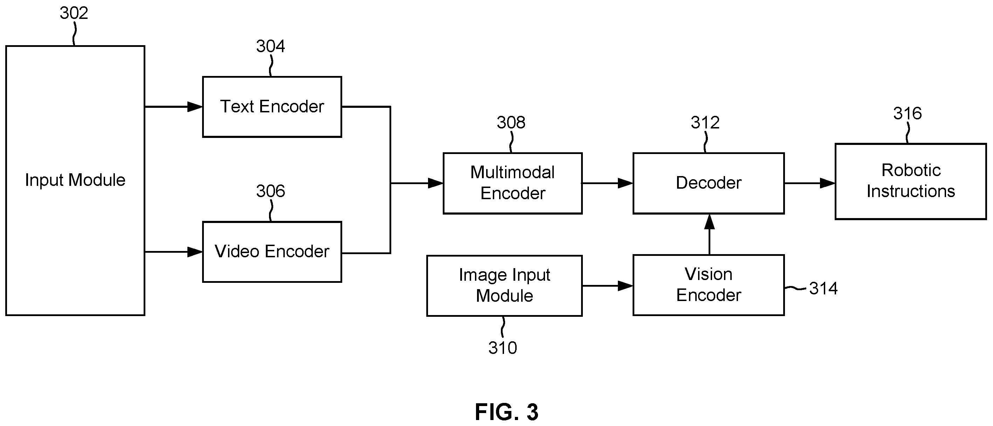

FIG. 3 illustrates a block diagram of a robotic instructions generating system 300, in accordance with implementations of the present disclosure. The robotic instructions generating system 300 may include an input module 302, a text encoder 304, a video encoder 306, a multimodal encoder 308, a decoder 312, an image input module 310 and a vision encoder 314. Herein, the generation of robotic instructions in the present disclosure, has been explained by considering an example where the input module 302 may receive a video of virtual demonstration of a task. Based on the input video, corresponding robotic instructions may be generated, thereby enabling robot 230 to perform the task.

Specifically, the input module 302 may receive multimodal data from the video of virtual demonstration of a task, defining the desired robotic actions. The multimodal data may include, but not limited to, video data demonstrating one or more tasks and text data related to the one or more tasks. The video data may include visual representations of the desired robotic actions. The text data may include descriptions or instructions related to the one or more tasks, and offering textual context. Additional information may be extracted from the video, such as voiceover or subtitles, which can provide supplementary context or clarification related to the one or more tasks.

Further, the text encoder 304 and the video encoder 306 may receive the input text data and video data respectively, for further processing. Specifically, the video data may be represented as a sequence of frames (F) and the text data may include corresponding textual descriptions/captions (X). The video frames (F) may be processed by the video encoder 306 to extract video embedding (V). By way of a non-limiting example, video encoder 306 may be a neural network-based model adapted to process video data and generate corresponding video embeddings (V). The textual descriptions/captions (X) may be processed by the text encoder 304 to extract text embeddings (E). Further, the text encoder 304 may be a neural network-based model adapted to process text data and generate corresponding text embeddings (E).

In further detail, an open-source language model may generate the text embeddings (E). For example, the text encoder 304 may include a Bidirectional Encoder Representations from Transformers (BERT) encoder. The BERT encoder may be a multi-layer bidirectional Transformer model, that is configured to process the input text sequence in both directions (left to right and right to left) and uses the transformer architecture to capture contextual relationships between words. For example, The BERT encoder may process the input text and extract N contextualized text embeddings denoted by E = {ei} based upon the processed input text. The text embeddings (E) may capture the semantic and syntactic information of each word or token in the input text. Moreover, BERT encoder may operate on sequences of discrete tokens, which may be vocabulary words or special tokens. The special tokens SEP, CLS, and MASK may be used to denote sentence boundaries, the classification token, and masked tokens for pre-training purposes, respectively. The text embeddings (E) may be used for downstream tasks such as questioning/querying and answering, text classification, and machine translation.

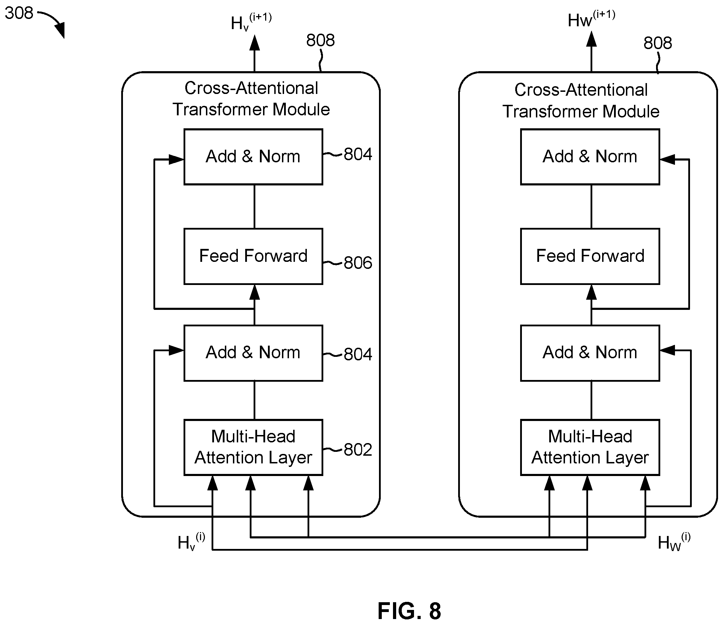

Moreover, the multimodal encoder 308 may combine/fuse the video embeddings (V) from the video encoder 306 and text embeddings (E) from the text encoder 304 into a unified representation, using a cross-attentional transformer (further described in conjunction with FIG. 8), thereby capturing the overall context and task requirements from the input video of virtual demonstration of the task.

Furthermore, the image input module 310 may receive an image data providing environmental data for the robotic task. The vision encoder 314 may extract the visual embedding from the image input module 310, thereby providing contextual information of the environment in which the robot 230 may operate. Specifically, the text embeddings (E) may determine the semantic meaning and context of words, allowing the text encoder 304 to identify the relationships between words and sentences. The video embeddings (V) may identify the visual information (e.g., colors, textures, shapes, etc.) and temporal information (e.g., motion, object tracking, etc.), allowing the video encoder 306 to identify the actions, objects, and events depicted in the input video. The visual embeddings (V) may determine the visual content of the image, allowing the vision encoder 314 to identify the objects, scenes, and relationships depicted in the image of environment in which a robotic task may be executed.

Thereafter, the decoder 312 may generate robotic instructions 316 from multimodal data received from the multimodal encoder 308 and the vision encoder 314. The robotic instructions 316 may be in form of programming language (for example Python). Specifically, the decoder 312 may be an autoregressive model and generate robotic instructions 316 using autoregressive technique. The autoregressive models are a class of machine learning (ML) models that automatically predict the next component in a sequence by taking measurements from previous inputs in the sequence. Autoregression is a statistical technique used in time-series analysis that assumes that the current value of a time series is a function of its past values. Autoregressive models use similar mathematical techniques to determine the probabilistic correlation between elements in a sequence. They then use the knowledge derived to guess the next element in an unknown sequence. For example, during training, the autoregressive model processes several English language sentences and identifies that the word *"is"* always follows the word *"there.* " The auto-regressive model then generates a new sequence that has *"there is"* together. In essence, the decoder 312 is a ML model which is trained on the basis of input video of virtual demonstration of the task and the real-world environment based upon images received at the image input module 310. The decoder 312 accordingly provides information of the environment in which the robot 230 may operate. Once the decoder 312 is trained, it can generate or predict robotic actions or instructions automatically.

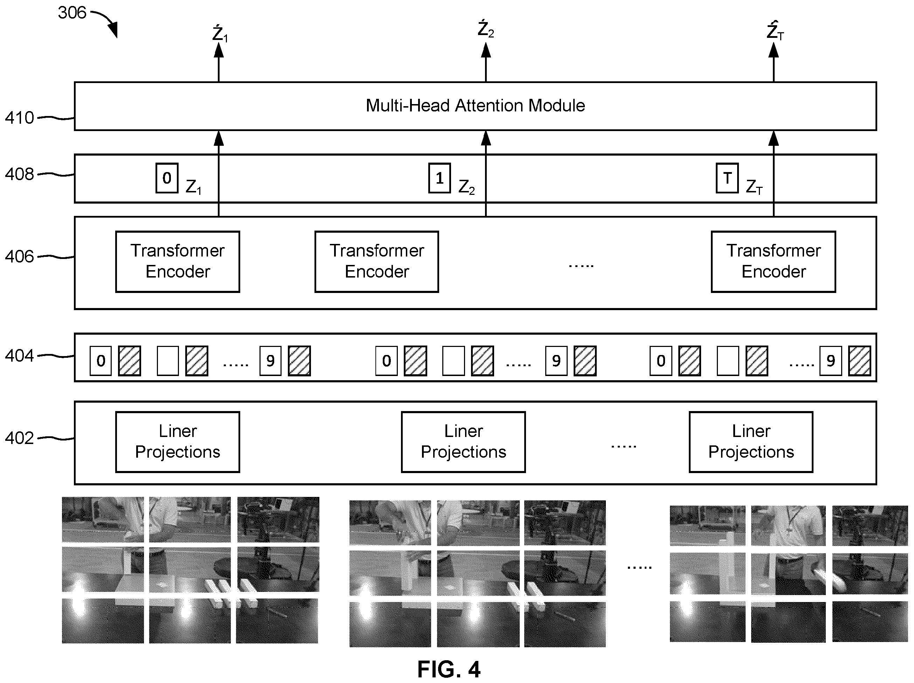

FIG. 4 illustrates a block diagram that presents the video encoding by the video encoder 306 to capture frame-level feature from the input video of virtual showing demonstration of the task.

The input video data to the video encoder 306 may include a sequence of video frames (F). For instance, the sequence of video frames (F) may be denoted as X₁, X₂, ..., X_{T} (not shown with reference numbers in FIG. 4). The video encoder 306 may split each frame of the sequence of video frames in the video data into a predetermined number of patches. The patches may be non-overlapping and of same size. For instance, each frame the sequence of video frames in the video data may be split into a predetermined non-overlapping patches of, for example, 16x16 size (or another size). Furthermore, the video encoder 306 may flatten each of the predetermined number of patches into a vector followed by projecting each vector into a linear projections 402. For instance, each of the predetermined number of patches may be flattened into 256 dimensional (256D) vectors and then projected into a higher-dimensional space, for example 768 dimensional (768D). Thereafter, the video encoder 306 may add a learned [CLASS] token 404 to the linear projections 402 of each vector. The linear projections 402 of each of the predetermined number of patches may be processed through a transformer encoder 406. Specifically, the transformer encoder 406 may apply shared weights across all frames of the input video. Moreover, the transformer encoder 406 may be a neural network architecture including multiple layers of self-attention and feed-forward neural networks, thereby enabling processing of linear projections 402 of each of the predetermined number of patches.

Moreover, positional embeddings 408, denoted as Z₁, Z₂,....,Z_{T} may be added to the projected vectors to encode the temporal order of the each of the predetermined number of patches within the frame. Specifically, a plurality of portions of an input sequence may be determined that includes a plurality of temporal dependencies.

Further, the video encoder 306 may execute a multi-head attention module 410 based upon the linear projections 402 of each of the predetermined number of patches. Specifically, the sequence of patches, with spatial embeddings, may be processed by multi-head attention module 410. Specifically, the multi-head attention module 410 may be a module for attention mechanisms which runs through an attention mechanism several times in parallel. The independent attention outputs, herein denoted as Ź₁, Ź₂.... Ź_{T}, may be concatenated and linearly transformed into the expected dimension.

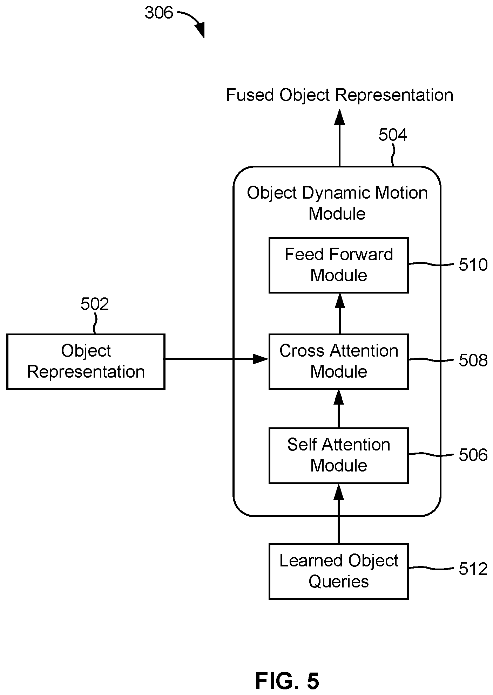

FIG. 5 illustrates a block diagram that presents the video encoding by the video encoder 306 to capture dynamic motion of the object from the input video of virtual demonstration of the task.

Specifically, the video encoder 306 may include an object dynamic motion module 504 to capture dynamic motion of the object from the input video of virtual showing demonstration of the task. The object dynamic motion module 504 may capture information about the object's movement over time, such as its velocity, acceleration, and direction across the sequence of video frames.

In further detail, the object dynamic motion module 504 may receive as input a sequence of object representation 502, represented as their bounding box representations and dynamic motion features. Additionally, the object dynamic motion module 504 may receive as an input, a set of learned object queries 512. The set of learned object queries 512 may represent the latent representation of object motion for each frame of the sequence of video frames (F).

Specifically, the learned object queries 512 may refer to a set of learned representations that facilitate the object dynamic motion module 504 towards specific objects or regions of interest within an image or video sequence. Moreover, the learned object queries 512 may be used in conjunction with an attention mechanism to guide the object dynamic motion module 504's focus towards the object of interest. The attention mechanism allows the object dynamic motion module 504 to weigh different parts of the image or video sequence based on their relevance to the learned queries.

For example, considering a task of object tracking in a video sequence. The object dynamic motion module 504 may use learned object queries 512 to focus on specific parts of the object's appearance or motion that are important for tracking. For instance, if the object is a person or animation of a person, the object dynamic motion module 504 may learn queries that focus on head, torso, or limbs of the person or animation of the person. The queries may enable the object dynamic motion module 504 to identify and track the object even if its appearance changes over time.

The object dynamic motion module 504 may further include a self-attention module 506, a cross-attention module 508 and a feed forward module 510. The self-attention module 506 may capture relationships between different parts of the object representation 502, thereby identifying internal dependencies and relationships within the object's features. The cross-attention module 508 may combine the object representation 502 with learned object queries (512), thereby allowing the video encoder 306 to analyze the relevant information in the object representation 502 based on the learned object queries (512). The feed forward module 510 may be a neural network layer that applies a non-linear transformation to the features. Specifically, the feed forward module 510 may transform the features by applying non-linearity and further refining the object representation 502. Consequently, the output of the object dynamic motion module 504 may be a fused object representation 502, which combines information about the object's dynamic motion, bounding box representation, and learned object queries (512).

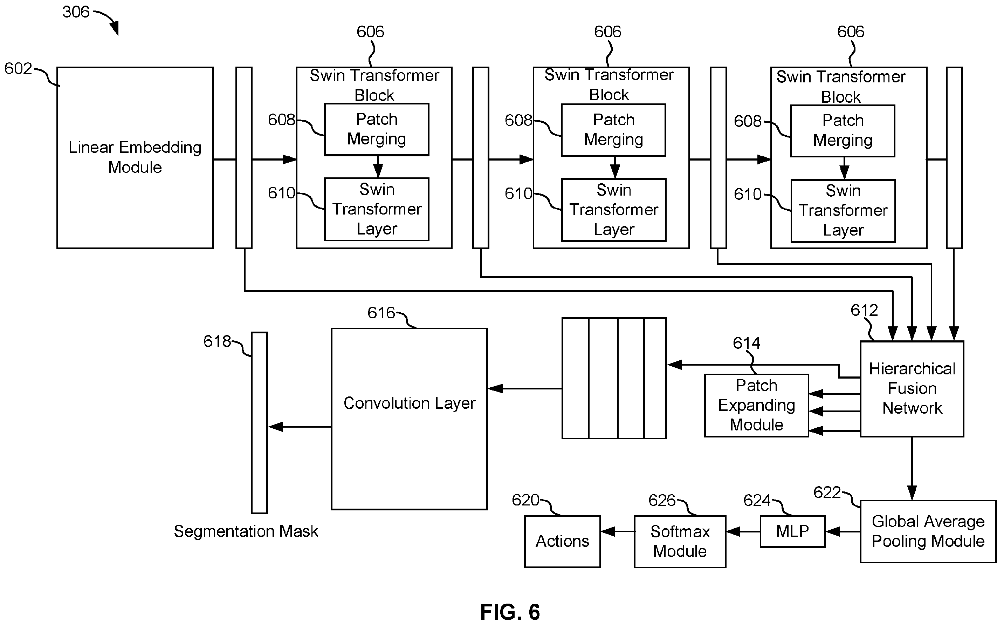

FIG. 6 illustrates a hierarchical vision transformer (HVT) architecture of the video encoder 306 for image segmentation and action recognition tasks, in accordance with implementations of the present disclosure.

The video encoder 306 may receive image data providing environmental data for the robotic task, as input. The input image may be divided into plurality of non-overlapping patches of same size. Each patch may be flattened into a vector and then projected into a linear space by the linear embedding module 602. Further, each linearly projected patch may be processed through a plurality of swin transformer blocks 606. The swin transformer block 606 may further include a patch merging module 608 and a swin transformer layer 610. Further, the swin transformer blocks 606 may divide the plurality of image patches into further smaller patches as they progress through the plurality of swin transformer blocks 606. Thus, plurality of swin transformer blocks 606 may capture both fine-grained and coarse-grained information from the plurality of image patches, thereby capturing details at different levels of abstraction. Moreover, the patch merging module 608 may combines features from adjacent image patches, thereby, reducing the spatial resolution and increasing the channel dimensions. The swin transformer layer 610 may apply self-attention and feed-forward neural networks to identify relationships between the plurality of image patches. Specifically, the swin transformer layer 610 may identify the relationships between different patches of the image and extract contextual information.

In further detail, the output features from the swin transformer blocks 606 are fused/combined using a hierarchical fusion network 612, thereby capturing information at multiple scales. Furthermore, a patch expanding module 614 may increase the spatial resolution of the plurality of image patches while maintaining the channel dimensions, thereby matching the size of the input image. The patch expanding module 614 may include increasing the spatial dimensions of the plurality of image patches using techniques like bilinear or nearest neighbor interpolation and adjusting the number of channels to match the desired output dimension. Moreover, a convolutional layer 616 may be implemented to combine features from different scales and extract higher-level semantic information. The convolutional layer 616 may implement convolution operations to the fused output features from hierarchical fusion network 612, combining information from neighboring pixels. The convolutional layer 616 can be configured with different kernel sizes, strides, and padding to control the receptive field and the level of abstraction of the extracted features. In essence, passing of output of the hierarchical fusion network 612 through the patch expanding module 614 and the convolutional layer 616 may generate the segmentation mask 618. The segmentation mask 618 can be a two-dimensional (2D) image or matrix that may label each pixel in the plurality of image patches with a specific class or category. Thus, the segmentation mask 618 may identify and localize objects or regions of interest and draws a boundary line on the objects or regions of interest. Moreover, the segmentation mask 618 may be a binary or categorical map that indicates the regions of an image that belong to different objects or classes. In other words, the segmentation mask 618 may be a labeled image where each pixel is assigned a class label, such as "object" or "background". The binary mask may assign each pixel either 0 (background) or 1 (object). The binary mask may be commonly used for tasks like object detection or instance segmentation, where the goal is to identify individual objects within an image. The categorical mask may assign each pixel a class label from a predefined set of categories. The categorical mask may be used for semantic segmentation, where the goal is to classify each pixel into its corresponding semantic class, such as "person", "car", or "sky".

Additionally, the plurality of actions 620 may be the predicted actions representing the events or activities occurring in the plurality of image patches. Moreover, the output of the hierarchical fusion network 612 may be processed through a global average pooling module 622, a multi-layer perceptron (MLP) 624 and a softmax module 626. Specifically, the hierarchical fusion network 612 may combine output features from different stages of the swin transformer block 606, capturing information at multiple scales. The output features may represent the semantic and spatial information of the plurality of image patches. The output features may be pooled by the global average pooling module 622, which aggregates the output feature values across the spatial dimensions (height, width, and/or depth), thereby resulting in a fixed-size feature vector. Further, the pooled features from the global average pooling module 622 may be processed through the multi-layer perceptron (MLP) 624. The MLP 624 can be used to learn complex relationships between the features and the output actions. Thereafter, the output of the MLP 624 may be processed through the softmax module 626, which normalizes the values into a probability distribution. Thus, ensuring that the predicted action probabilities sum up to 1. Consequently, the output of the softmax module 626 may represent the probabilities of different action classes. The class with the highest probability may be selected as the predicted action 620. In essence, the generation of actions 620 may include extracting features from the hierarchical fusion network 612, aggregating the features using the global average pooling module 622, transforming the features using the MLP 624, and obtaining the predicted action probabilities from the softmax module 626. The class with the highest probability may be selected as the final prediction of actions 620.

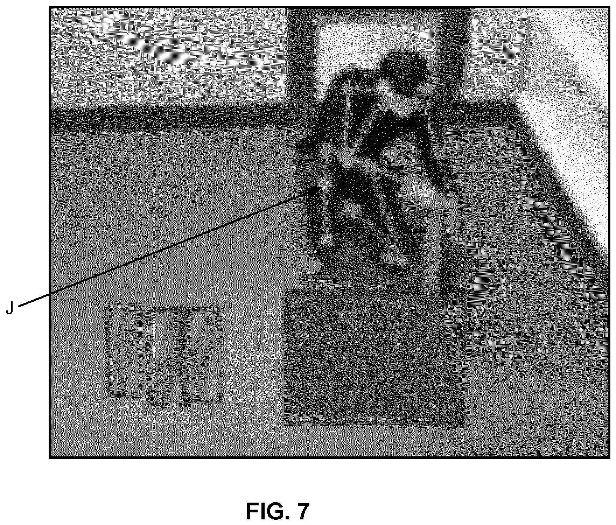

FIG. 7 illustrates an exemplary representation of processing of the analyzed video of virtual demonstration of a task. For instance, the video encoder 306 may receive the sequence of F consecutive frames, each including the two-dimensional (2D) coordinates of J joints. The coordinates may be obtained using techniques like, but not limited to, standard 2D pose estimation techniques or the vision transformer (ViT) pose estimator technique. For each frame, the Multi-Layer Perceptron (MLP) 624 may be used to extract features. The MLP 624 may further include repeated structures of Linear, BatchNorm, ReLU, and Dropout layers. The linear layer may apply a linear transformation to the input features. The BatchNorm layer may be a normalization layer that standardizes the input features to with zero mean and unit variance. The ReLU layer may applies the Rectified Linear Unit activation function to implement non-linearity. The Dropout layer may implement a regularization technique to randomly drops out neurons, thereby preventing overfitting.

Furthermore, the video encoder 306 may utilize the multi-head self-attention (masked) technique to learn the joint representation of J points for each frame of the sequence of F consecutive frames. The attention mechanism may be masked to ensure that each point (J) can only refer to previous frames, preventing information leakage from future frames. Moreover, the self-attention mechanism may enable the video encoder 306 to capture the relationships between different joints J within a frame and across frames. The final embedding may be a joint representation of J points across the entire sequence of F frames. In essence, the video encoder 306 may processes a sequence of 2D joint coordinates and extracts features using the MLP 624. Multi-head self-attention may be then applied to learn the joint representation, capturing the relationships between joints within and across frames. The final embedding provides a comprehensive representation of the pose information in the video.

FIG. 8 illustrates a block diagram of the multimodal encoder 308. The multimodal encoder 308 may combine/fuse the video embeddings (V) from the video encoder 306 and text embeddings (E) from the text encoder 304 into a unified representation, using the cross-attentional transformer 808. Specifically, the cross-attentional transformer 808 may enable the the multimodal encoder 308 to analyze information in one modality based on the context from the other. Further, the multimodal encoder 308 may capture the relationships between the video embeddings (V) and text embeddings (E).

For instance, the cross-attentional transformer 808 may receive as input video and text features, denoted by Hᵥ(i) and H_{w}(j), respectively. The input video and text features may be processed through a multi-head attention layer 802, which allows the cross-attentional transformer 808 to attend to different parts of the input sequence simultaneously. The output of the multi-head attention layer may be processed through a feed-forward 806 layer, which applies non-linear transformations to the input video and text features. The output of the feed-forward 806 layer may be added to the input features and normalized by an addition and normalization 804 layer. Consequently, the final output may be Hᵥ(i+1) and H_{w}(i+1), representing the encoded sequences after passing through the cross-attentional transformer 808.

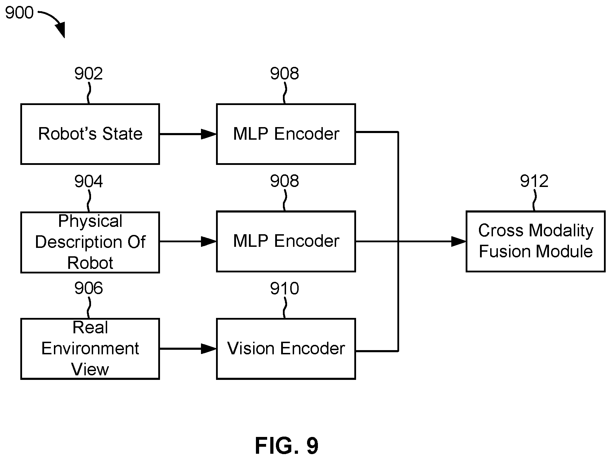

FIG. 9 illustrates a block diagram of the decoder 312. The decoder 312 may be a neural network based model receiving information about the physical description of a robot 904, real environment view 906, including image data providing environmental data and robot's state 902 including gripper and joints information, as input. Specifically, a Unified Robotics Description Format (URDF) file may provide information about the physical description of the robot. The URDF file may describes a robot's physical components and how they move relative to each other.

Moreover, the URDF file may be encoded using a multi-layer perceptron (MLP) encoder 908. The MLP encoder 908 may extract relevant features about the robot's physical structure. The real environment view 906 may be transformed into vision embeddings by the vision encoder 910, thereby, capturing visual information about the environment. Additionally, the robot's state 902 information may be encoded using the multi-layer perceptron (MLP) encoder 908, thereby, extracting features related to the robot's current configuration. Furthermore, the encoded features from the multi-layer perceptron (MLP) encoder 908 and the vision encoder 910 may fused together using a cross-modality fusion module 912. The cross-modality fusion module 912 may combine information from the vision encoder 910 and the MLP encoder 908 to create a comprehensive representation of the robot's environment and its own state.

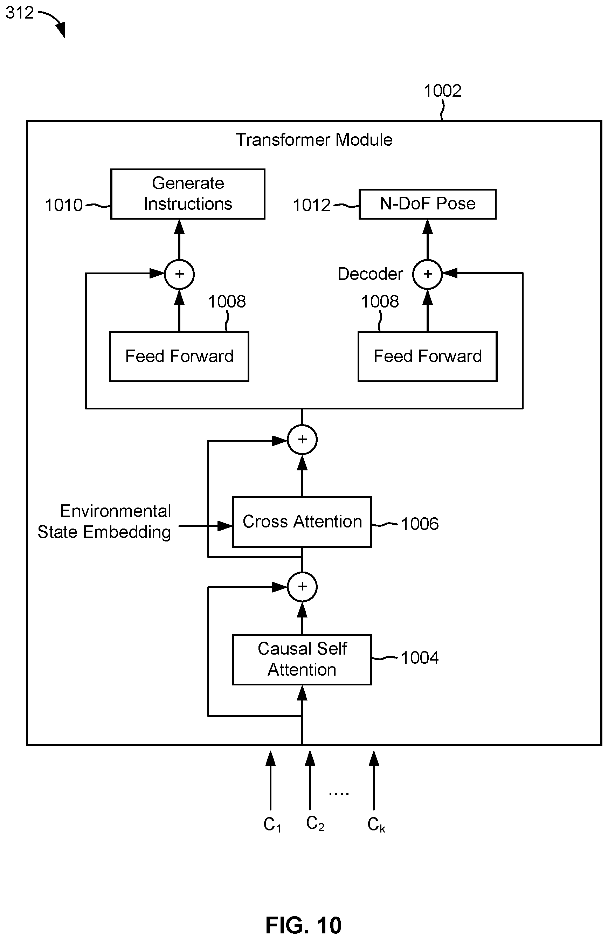

FIG. 10 illustrates a block diagram depicting architecture of the decoder 312. The decoder 312 may include a plurality of transformer module 1002. Further, the plurality of transformer module 1002 may include a causal self-attention 1004, a cross attention 1006 and one or more feed-forward 1008 layer. The transformer module 1002 may receive a sequence of tokens, representing the desired robotic action. For instance, the sequence of tokens, may be represented by C₁, C₂, ..., Cₖ. Moreover, the sequence of tokens may be tokenized into individual words or subwords and then embedded into a fixed-dimensional space. The positional encodings may be added to the embeddings to incorporate information about the token's position within the sequence. Further, the embeddings may be normalized to implement zero mean and unit variance. Specifically, the causal self-attention 1004 may enable the transformer module 1002 to attend to previous tokens in the sequence, ensuring that the generated instructions 1010 is autoregressive. The cross-attention 1006 may enable the transformer module 1002 to attend to the visual embeddings, incorporating contextual information from the environment. Furthermore, the feed-forward 1008 layer may transform the features and introduce non-linearity. Consequently, the final output of the transformer module 1002 may include a generated instructions 1010, representing the generated robotic actions and N degree of freedom (N-DoF) pose 1012 tokens, representing the robot's degree of freedom. Specifically, instructions generation may refer to the process of automatically creating robotic action plan that can be executed by a robot to perform a specific task. The generated instructions 1010 may include instructions for controlling the robot's movements, manipulating objects, and interacting with the environment. Moreover, the N-DoF pose 1012 may represents the position and orientation of an object in three-dimensional (3D) space. N-DoF pose 1012 may further include position coordinates (for example, the x, y, and z coordinates of the object's center of mass) and orientation (for example roll, pitch, and yaw). In essence, the N-DoF pose 1012 may describe the desired position and orientation of a robot's end-effector (for example, a gripper or tool) or other objects in the environment.

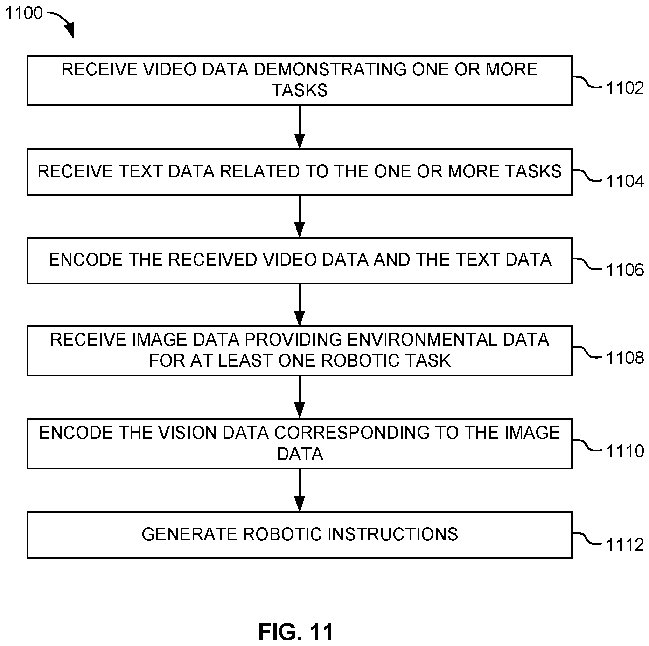

FIG. 11 illustrates the flow diagram of an example method 1100 for generating robotic instructions, in accordance with implementations of the present disclosure. In some implementations, the method 1100 may be executed within the system for generating robotic instructions as described in relation to FIG. 3.

At step 1102, the method 1100 may include receiving a video data demonstrating one or more tasks. Specifically, the input module 302 may receive the video data. The video data may include actions or interactions that serve as examples of the desired robotic actions.

At step 1104, the method 1100 may include receiving text data related to the one or more tasks. Specifically, the input module 302 may receive the text data. The text data may include descriptions, instructions, or other textual content that provides additional information about the desired robotic actions.

At step 1106, the method 1100 may include encoding the video data and the text data. The encoding may be generated using at least one cross-attentional transformer. Specifically, the video encoder 306 may encode the video data to generate video embeddings. Further, the text encoder 304 may encode the text data to generate text embeddings. Thus, relationships between the video data and the text data may be identified, thereby providing a comprehensive understanding of the desired robotic actions.

At step 1108, the method 1100 may include receiving an image data providing environmental data for at least one robotic task. Specifically, the image data may provide visual information about the surroundings that is relevant for task planning and execution by robot 230.

At step 1110, the method 1100 may include encoding vision data corresponding to the image data received from image input module 310. Specifically, the vision encoder 314 may encode the vision data and extract relevant visual features from the image, for example object locations, colors, and textures, or the like.

At step 1112, the method 1100 may include generating robotic instructions 316, based upon the encoded video data, text data, and vision data. Specifically, the robotic instructions 316 may include commands, action plans, or other representations that can be understood by the robot 230 (Referring to FIG. 2). The generated robotic instructions 316 may be tailored to the specific tasks demonstrated in the video and the environment captured in the image data via image input module 310.

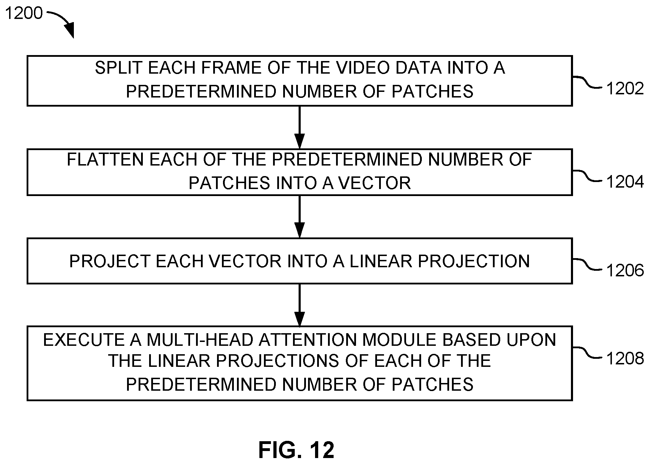

FIG. 12 illustrates the flow diagram of an example method 1200 for encoding the video data by the video encoder 306, in accordance with implementations of the present disclosure. In some implementations, the method 1200 may be executed within the system for generating robotic instructions as described in relation to FIG. 3.

At step 1202, the method 1200 may include splitting each frame of the video data into a predetermined number of patches. The patches may be non-overlapping and of same size. Further, the size of the patches may be adjusted based on the desired level of granularity.

At step 1204, the method 1200 may include flattening each of the predetermined number of patches into a vector. Specifically, the pixels within the patch are arranged into a one-dimensional array.

At step 1206, the method 1200 may include projecting each vector into a linear projection. Specifically, a linear transformation may be applied to the vectors, which maps the vectors to a new feature space. The linear projections 402 (Referring to FIG. 4) may extract relevant features and reduce dimensionality.

At step 1208, the method 1200 may include executing a multi-head attention module based upon the linear projections 402 (Referring to FIG. 4) of each of the predetermined number of patches. Specifically, the multi-head attention module may analyze different parts of the input sequence simultaneously, capturing complex relationships and dependencies. Further, multi-head attention module may weigh the value of different patches and extract relevant information.

Implementations of the present disclosure provides technical solutions to multiple technical problems that arise in the context of generation of robotic instructions. For example, implementing the transformer-based architecture of video encoder 306 for encoding input video data may enable capturing the visual information in the video frames by using techniques like patch extraction, linear projections, positional encoding, and multi-head attention. The transformer encoder 406 layers further process the features to extract meaningful representations, enabling the decoder 312 to identify the temporal relationships and dependencies within the video data. Further, the cross-attentional transformer 808 may enable the Gen AI model to attend to relevant information in one modality while considering the context from the other. This enables the robotic instructions generating system 300 to capture the relationships between visual and textual elements, leading to more accurate and contextually relevant robotic instructions. The multimodal encoder 308 may effectively fuses visual and textual information, providing a comprehensive understanding of the input, thereby enabling the system to generate robotic instructions that are aligned with both the visual context and the textual description. Moreover, the decoder 312 may utilizes the autoregressive technique to generates each token in the output sequence based on the previously generated tokens. The autoregressive technique may enable the robotic instructions generating system 300 to generate coherent and contextually relevant robotic instructions. Additionally, in the present disclosure, the ability to generate robotic instructions from natural language and visual input, may enable both technical and non-technical users to interact with and control robotic systems.

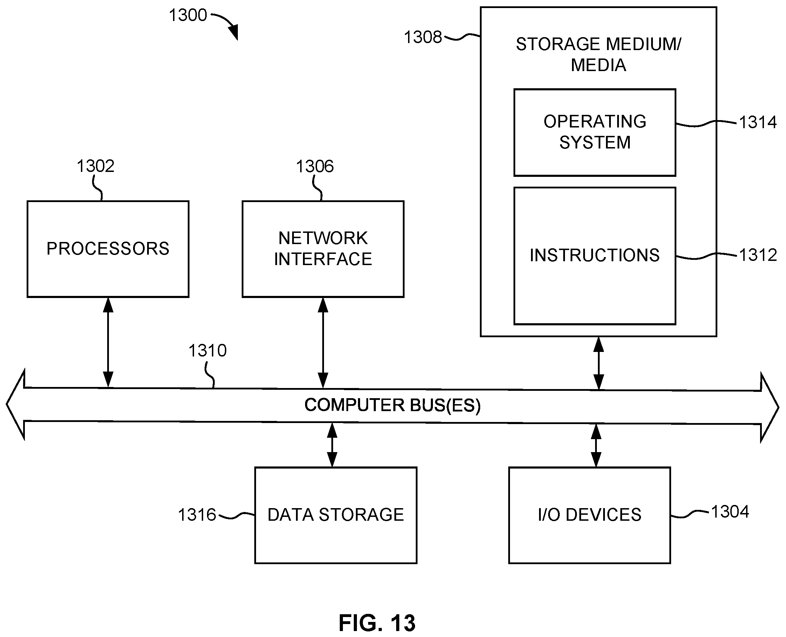

FIG. 13 illustrates a computer system 1300 that may be used to implement the system to generate robotic instructions. More particularly, computing machines such as desktops, laptops, smartphones, tablets, and wearables which may be used to implement the tasks that may have the structure of the computer system 1300. The computer system 1300 may include additional components not shown and that some of the process components described may be removed and/or modified. In another example, a computer system 1300 may be deployed on external-cloud platforms such as cloud, internal corporate cloud computing clusters, organizational computing resources, and/or the like.

The computer system 1300 includes processor(s) 1302, such as a central processing unit, ASIC or another type of processing circuit, input/output devices 1304, such as a display, mouse keyboard, etc., a network interface 1306, such as a Local Area Network (LAN), a wireless 802.11x LAN, a 3G or 4G mobile WAN or a WiMax WAN, and a computer-readable medium 1308. Each of these components may be operatively coupled to a bus 1310. The computer-readable medium 1308 may be any suitable medium that participates in providing instructions to the processor(s) 1302 for execution. For example, the computer-readable medium 1308 may be non-transitory or non-volatile medium, such as a magnetic disk or solid-state non-volatile memory or volatile medium such as RAM. The instructions or modules stored on the computer-readable medium 1308 may include machine-readable instructions 1312 executed by the processor(s) 1302 that cause the processor(s) 1302 to perform the methods and functions of the system to generate robotic instructions.

The system may be implemented as software stored on a non-transitory processor-readable medium and executed by the processors 1302. For example, the computer-readable medium 1308 may store an operating system 1314, such as MAC OS, MS WINDOWS, UNIX, or LINUX, and code for the system. The operating system 1314 may be multi-user, multiprocessing, multitasking, multithreading, real-time, and the like. For example, during runtime, the operating system 1314 is running and the code for the system is executed by the processor(s) 1302.

The computer system 1300 may include a data storage 1316, which may include non-volatile data storage. The data storage 1316 stores any data used or generated by the system.

The network interface 1306 connects the computer system 1300 to internal systems for example, via a LAN. Also, the network interface 1306 may connect the computer system 1300 to the Internet. For example, the computer system 1300 may connect to web browsers and other external applications and systems via the network interface 1306.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touchpad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network (LAN) and a wide area network (WAN), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A method for generating robotic instructions from contextual data comprising:
receiving, at one or more processors, video data demonstrating one or more tasks;
receiving, at the one or more processors, text data related to the one or more tasks;
encoding, at the one or more processors, the video data and the text data, wherein the encoding is generated using at least one cross-attentional transformer;
receiving, at the one or more processors, image data providing environmental data for at least one robotic task;
encoding, at the one or more processors, vision data corresponding to the image data; and
generating, at the one or more processors, based upon the video data and the text data that was encoded and the vision data that was encoded, robotic instructions.

2. The method as recited in claim 1, further comprising:
splitting each frame of the video data into a predetermined number of patches;
flattening each of the predetermined number of patches into a vector;
projecting each vector into a linear projection; and
executing a multi-head attention module based upon the linear projections of each of the predetermined number of patches.

3. The method as recited in claim 1 or 2, further comprising determining a plurality of portions of an input sequence that includes a plurality of temporal dependencies.

4. The method as recited in any one of the preceding claims, wherein the encoding of the text data includes text embeddings from input text using a bi-direction encoder representations from transformers;
and/or
wherein the encoding of the video data and the text data creates a dynamicity of an object.

5. The method as recited in any one of the preceding claims, further comprising:
contextualizing the text data using a cross-attention transfer block attending to the video data and outputting features; and
contextualizing the features using a transformer block with self-attention.

6. The method as recited in any one of the preceding claims, wherein the patches are non-overlapping and a same size;
and/or
further comprising generating an object dynamic motion block based on an object bounding box representation that generates a fused object representation.

7. A system for generating robotic instructions from contextual data, the system comprising:
at least one memory storing instructions; and
at least one processor communicatively coupled with the at least one memory and configured to execute the instructions to perform operations comprising:
receiving video data demonstrating one or more tasks;
receiving text data related to the one or more tasks;
encoding the video data and the text data, wherein the encoding is generated using at least one cross-attentional transformer;
receiving image data providing environmental data for at least one robotic task;
encoding vision data corresponding to the image data; and
generating, based upon the video data and the text data that was encoded and the vision data that was encoded, robotic instructions.

8. The system as recited in claim 7, wherein the operations further comprise:
splitting each frame of the video data into a predetermined number of patches;
flattening each of the predetermined number of patches into a vector;
projecting each vector into a linear projection; and
executing a multi-head attention module based upon the linear projections of each of the predetermined number of patches.

9. The system as recited in claim 7 or 8, wherein the operations further comprise determining a plurality of portions of an input sequence that includes a plurality of temporal dependencies.

10. The system as recited in any one of claims 7 to 9, wherein the text data includes text embeddings from input text using a bi-direction encoder representations from transformers;
and/or
wherein the encoding of the video data and the text data creates a dynamicity of an object.

11. The system as recited in any one of claims 7 to 10, wherein the operations further comprise:
contextualizing the text data using a cross-attention transfer block attending to the video data and outputting features; and
contextualizing the features using a transformer block with self-attention.

12. The system as recited in any one of claims 7 to 11, wherein the patches are non-overlapping and a same size;
and/or
wherein the operations further comprise generating an object dynamic motion block based on an object bounding box representation that generates a fused object representation.

13. A non-transitory computer-readable media (CRM) storing instructions thereon, which, when executed by at least one processor of a computing device, cause the computing device to generate robotic instructions from contextual data by performing operations comprising:
receiving video data demonstrating one or more tasks;
receiving text data related to the one or more tasks;
encoding the video data and the text data, wherein the encoding is generated using at least one cross-attentional transformer;
receiving image data providing environmental data for at least one robotic task;
encoding vision data corresponding to the image data; and
generating, based upon the video data and the text data that was encoded and the vision data that was encoded, robotic instructions.

14. The non-transitory CRM as recited in claim 13, wherein the operations further comprise:
splitting each frame of the video data into a predetermined number of patches;
flattening each of the predetermined number of patches into a vector;
projecting each vector into a linear projection; and
executing a multi-head attention module based upon the linear projections of each of the predetermined number of patches.

15. The non-transitory CRM as recited in claim 13 or 14, wherein the operations further comprise:
determining a plurality of portions of an input sequence that includes a plurality of temporal dependencies;
contextualizing the text data using a cross-attention transfer block attending to the video data and outputting features; and
contextualizing the features using a transformer block with self-attention,
wherein the text data includes tex embeddings from input text using a bi-direction encoder representations from transformers, and
wherein the encoding of the video data and the text data creates a dynamicity of an object;
and/or
wherein the operations further comprise generating an object dynamic motion block based on an object bounding box representation that generates a fused object representation, and wherein the patches are non-overlapping and a same size.
